Europäisches Patentamt

European Patent Office

Office européen des brevets

(11) Veröffentlichungsnummer: **0 068 234 B1**

# EUROPÄISCHE PATENTSCHRIFT

(45) Veröffentlichungstag der Patentschrift:
17.04.85

(51) Int. Cl.⁴: **E 05 F 15/10**

(21) Anmeldenummer: 82105127.3

(22) Anmeldetag: 11.06.82

(54) Torantrieb mit einem elektrischen Antriebsmotoraggregat.

(30) Priorität: 10.06.81 DE 8117194 U
03.02.82 DE 8202713 U

(43) Veröffentlichungstag der Anmeldung:
05.01.83 Patentblatt 83/1

(45) Bekanntmachung des Hinweises auf die Patenterteilung:
17.04.85 Patentblatt 85/16

(84) Benannte Vertragsstaaten:
AT BE CH DE FR GB IT LI NL

(56) Entgegenhaltungen:
DE - A - 2 649 629
DE - A - 2 741 538
DE - A - 2 924 015
DE - U - 7 817 731
DE - U - 7 917 854
GB - A - 2 053 344
GB - A - 2 054 735
US - A - 3 059 485
US - A - 4 231 191

(73) Patentinhaber: HÖRMANN KG ANTRIEBS- und
STEUERUNGSTECHNIK, Remser Brook 11 (Ortsteil
Marienfeld), D-4834 Harsewinkel 2 (DE)

(72) Erfinder: Hörmann, Michael, Upheider Weg 94,
D-4803 Steinhagen/Westfalen (DE)

(74) Vertreter: Flügel, Otto, Dipl.-Ing. et al, Dipl.-Ing. Otto
Flügel Dipl.-Ing. Manfred Säger Patentanwälte
Cosimastrasse 81 Postfach 810 540,
D-8000 München 81 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf einen Torantrieb mit den Merkmalen des Oberbegriffes des Anspruches 1.

Ein solcher als Ketten-Schleppantrieb ausgebildeter Torantrieb ist bereits in dem auf dem DE-U-7 817 731 basierenden DE-U-7 917 854 wiedergegeben, der bereits in mancher Hinsicht vorteilhaft arbeitet und einfach zu montieren ist sowie bereits einen im Rahmen eines solchen Antriebes erforderlichen Unfallschutz durch Abschalten bzw. Umschalten der Drehrichtung des Antriebsmotors bei im Zuge der Torblattbewegung auftretenden Widerständen durch insbesondere Fremdeinwirkung ermöglicht.

Dabei wurde bereits der vom Motoraggregat ausgehende Treibriemen zur Weitergabe der Antriebsbewegung an die Schleppeinrichtung für das Torblatt mittels zweier Riemenleiträder derart um das am Ausgang des Antriebsmotoraggregates angeordnete bzw. ausgebildete Riementreibrad geführt, daß sich ein ausreichend großer Umschlingungswinkel für die Weitergabe der Antriebskraft von dem Riementreibrad an den Riemen ergibt.

Durch Lagerung wenigstens der Riemenleiträder an einer dann um eine außerhalb der Abtriebswelle gelegene Achse verschwenkbar gehaltenen Platte erreicht man, daß das je nach Antriebsrichtung stärker belastete Riementrum eine größere Anlagekraft auf das ihm zugeordnete Riemenleitrad ausübt als das andere Trum auf das seine. Tritt aufgrund eines Hindernisses in der Bewegungsbahn des Torblattes eine besonders hohe Belastung in einem Riementrum auf, weil der Antriebsmotor zunächst weitertreibt, wird die Platte entsprechend dem stärker belasteten Riemen verschwenkt, wobei sie über einen Ausleger einen von zwei Schaltern betätigt. Durch diesen Schalter wird der Motor abgeschaltet oder derart umgeschaltet, daß er seine Drehrichtung umkehrt und damit das Torblatt wieder von dem Hindernis entfernt. Der in der anderen Verschwenkrichtung angeordnete weitere Schalter ermöglicht ein Aus- bzw. Umschalten des Antriebsmotors auch in der entgegengerichteten Torblattbewegung bzw. Antriebsrichtung des Antriebsmotors. Da die Grundlasten für die Torbewegung in Öffnungsstellung und in Schließstellung unterschiedlich groß sein können, wird dem dadurch Rechnung getragen, daß man die Schalterbetätigung entsprechend einstellbar gestaltet.

Um sicherzustellen, daß möglichst geringe Betätigungswege bei Ausschwenken der Platte im Hindernisfall zurückgelegt werden müssen, was nämlich zu einer Aufschaukelung der Plattenverschwenkbewegung bei etwas ruckweise erfolgendem Normalbetrieb zur Folge haben könnte, hat man nach dem DE-Gbm 7 917 854 oder der identischen GB-A-2 653 344 das Spiel zwischen dem Ausleger und den Schaltern klein gehalten bzw. ausgeschaltet. Dies geschieht dadurch, daß man den Ausleger durch entsprechend beidseitig angreifende, vorgespannte Federn in einer neutralen Betriebslage gehalten hat, die er zum Zwecke der Schalterbetätigung erst nach Überwinden der Vorspannkraft der einen oder der anderen Feder verlassen konnte. Die Schalterbetätigung selbst erfolgt dann über jeweils eine kurze Verschwenkstrecke hinweg. Die in Anpassung an die jeweiligen Betriebsverhältnisse vorgesehene Veränderbarkeit der Federspannung wurde dadurch bewirkt, daß die parallel zu dem federnden Schalterelement angeordneten Federn mittels je eines Exzenters mehr oder weniger stark vorgespannt werden können. Durch die Parallelschaltung der einstellbaren Feder und der Feder des Schalters, der als käufliches Teil insoweit nicht beliebig modifizierbar ist, ergibt sich eine Addition der Federkonstanten im Sinne einer zunehmenden »Federhärte«. Dadurch ergibt sich eine Beschränkung der Feinfühligkeit der Einstellbarkeit. Auch ist das für die Veränderung der Federvorspannung vorgesehene Exzenterglied verhältnismäßig aufwendig in der Herstellung, die mittels des Exzenters einstellbaren Federn bedürfen einer gesonderten Führung.

Das nach dem Stand der Technik — DE-U-7 817 731 — bekannte Gehäuse, daß das Motorantriebsaggregat, die Abschalt- bzw. Umschalteinrichtung für die Überwachung der Torblattbewegung sowie die Getriebeteile einschließlich des Antriebsritzels für den Ketten-Schleppantrieb aufnimmt, ist mehrteilig ausgebildet, um die Transportverhältnisse und die Montagearbeiten des Antriebes am Einsatzort zu vereinfachen. Zu diesem Zwecke ist die getriebliche Verbindung zwischen dem Antriebsritzel des Ketten-Schleppantriebes zu den vorgeschalteten Getriebeeinrichtungen mit einer Kupplung versehen, konusförmigen Eingriff beinhaltet, der mit Hilfe einer Schraubverbindung verspannt wird, so daß die Antriebsenergie über diese Kupplung kraftschlüssig übertragen wird. Das Gehäuse ist in seinem, der Anbringung an der Garagendecke dienenden Basisteil zweiteilig ausgeführt, der eine Teil trägt die Lagerung für das Abtriebsritzel des Kettenantriebes, der andere trägt unter anderem das Antriebsmotoraggregat. Nach einmal erfolgter Montage läßt sich daher das Antriebsmotoraggregat von dem Abtriebsritzel über die kraftschlüssig arbeitende Kupplung nicht mehr trennen, ohne die Befestigung des Gehäuses an der Garagendecke zu lösen.

Eine feinfühlige, den Unterschied zwischen der Riementrumspannung im normalen Betriebsfall und im Störfall der Torbewegung unterscheidende Aus- bzw. Umschalteinrichtung bedarf einer genauen Justierung bzw. Einstellbarkeit in Abhängigkeit von den jeweiligen Betriebsverhältnissen. Hierzu zählen beispielsweise auch Windbelastungen auf das Torblatt. Darüber hinaus können Alterungserscheinungen zu einer sich ändernden Normalbewegungscharakteristik des Torblattes führen. Diese Umstände und erforderliche Wartungsarbeiten sollen nach Montage des Antriebes und auch in der darauffolgenden Zeit möglichst einfach durchgeführt werden können. Eine durch Schmutzeinwirkung oder dergleichen betriebsunfähig werdende Schalteinrichtung, die aus Sicherheitsgründen in jedem Falle zu einer Abschaltung des Antriebsmotoraggregates führen soll, bedarf für den Austausch, der Säuberung oder dergleichen einer einfachen Zugänglichkeit. Schließlich soll auch für den Fall, daß das Antriebsmotoraggregat — beispielsweise wegen Stromausfall — betriebsunfähig ist, das Tor von Hand bewegt werden können, was gegen die getriebliche Verbindung bis zum Antriebsmotoraggregat, die normalerweise ein Untersetzungsverhältnis aufweist, praktisch nur möglich ist, wenn man eine entsprechende Abtrennbarkeit vorsieht. Auch für diesen Fall soll die Einrichtung sogar von Laienhand einfach und ungefährlich bedient werden können.

Der Erfindung liegt demgemäß die Aufgabe zugrunde, einen Torantrieb der eingangs genannten Art derart auszugestalten, daß deren besonders sicher und empfindlich arbeitend auszugestaltende Hindernisüberwachungseinrichtung bequem zu warten und einzustellen ist sowie auf Versagen dieser und anderer Teile des Motorantriebsaggregates ebenso einfach und schnell reagiert werden kann.

Diese Aufgabe wird erfindungsgemäß durch den Gegenstand des Anspruches 1 gelöst.

Bei dem erfindungsgemäß ausgestalteten Gehäuse ist ein Gehäuseteil gegenüber einem Chassisteil innerhalb einer Führung versetzbar gehalten, so daß die beiden Teile in eine dichtere und eine weniger dichte Zuordnung zueinander gelangen können. In der dichteren Zuordnung ist die Getriebekupplung im Eingriff, in der voneinander fortgerückten Stellung der Gehäuseteile ist diese Kupplung getrennt, so daß bei Versagen des Antriebsmotoraggregates, beispielsweise durch Stromausfall, das Tor von Hand bewegt werden kann. Einem durch Ausfall oder Verschmutzen der als Schaltereinrichtung erfindungsgemäß vorgesehenen Lichtschranke verursachten Versagen kann zunächst in gleicher Weise begegnet werden, so daß auch von daher die Beweglichkeit des Tores von Hand gesichert ist.

Diese Trennung der getrieblichen Verbindung zwischen dem Antriebsmotoraggregat und dem Antriebsritzel der Kette erfolgt erfindungsgemäß insoweit ohne Demontage des Antriebsaggregates, da dieses für diese Trennung in den Führungen verbleibt und damit nach wie vor mit dem Chassisteil des Gehäuses verbunden ist. Eine solche Versetzung innerhalb der Führungen zwischen der Betriebsstellung und der Trennstellung kann ohne weiteres so gestaltet werden, daß auch ein Laie diesen Vorgang auslösen kann. Dadurch wird die Möglichkeit geschaffen, daß auch der Laie bei Defekt des Antriebsaggregates in der Lage ist, das Tor von Hand zu bewegen, ohne das Eintreffen eines Fachmannes abwarten zu müssen und ohne daß die Gefahr besteht, daß durch gegenüber dem Normalbetrieb umgekehrter Kraftrichtung Beschädigungen der getrieblichen Verbindung zwischen Torblatt und Antriebsmotor hervorgerufen werden können.

Der Fachmann hat durch diese erfindungsgemäße Trennbewegung zwischen den Gehäuseteilen innerhalb der Führung die Möglichkeit, Reparaturen auszuführen, ohne das Antriebsaggregat ausbauen zu müssen. Für den Fall eines erforderlichen Austausches zumindest von Teilen des Aggregates und für das Einstellen der Federvorspannung der Hindernisüberwachungseinrichtung sowie für andere Wartungsarbeiten läßt sich das weitere Gehäuseteil bzw. ein Zwischengehäuseteil in eine weitere Öffnungslage versetzen bzw. aus den Führungen lösen.

Besonders bevorzugt ist also dafür Sorge getragen, daß in einem ersten Lösevorgang zunächst die Überführung der Kupplung in den ausgerückten Zustand erreicht wird, während erst in einem zweiten Lösevorgang das Motorantriebsaggregat und die Hindernisüberwachungseinrichtung durch Entfernen des Gehäusedeckels zugänglich werden. Damit wird erreicht, daß im Störungsfalle dem Laien zunächst die Bewegung des Torblattes von Hand ermöglicht wird, während erst nach einem zweiten Lösevorgang das Antriebsaggregat für den Fachmann zugänglich wird.

Der leichte Zugang zu der Hindernisüberwachungseinrichtung ist wegen deren Einstellbarkeit zu hoher Empfindlichkeit besonders vorteilhaft. Erfindungsgemäß werden im Rahmen der Hindernisüberwachungseinrichtung keine mechanisch betätigten Schalter mit Federn mehr verwendet, sondern eine Lichtschranke, in welche ein Abschirmteil bei hindernisbedingtem Verschwenken der Platte derart eingreift, daß der Strahlengang zwischen Sender und Empfänger der Lichtschranke unterbrochen wird. Zur Einstellung des Schaltschwellwertes greifen an der Platte einstellbare Federn an, deren Charakteristik somit ausschließlich für die Kraftverhältnisse verantwortlich ist, unter der die den Schaltzustand auslösende Verschwenkbewegung der Platte stattfindet. Die Lichtschranke hat darüber hinaus den Vorteil, daß sie als sogenannter Ruhekontakt betrieben werden kann, sie ist also immer eingeschaltet, wenn der Antrieb betriebsbereit ist bzw. sich in seiner Normalbetriebsstellung befindet. Fällt die Lichtschranke aus oder wird ihre Funktion anderweitig beeinträchtigt, so wird der Abschaltzustand simuliert, so daß die Gefahr des Ausfalles des Abschaltens bei Hindernis vermieden wird. Wie oben dargelegt, kann aber auch der Laie in einem solchen Fall durch Versetzen der Gehäuseteile innerhalb der Führung das Tor für die Bewegung von Hand freigeben.

In bevorzugter Ausgestaltung weist der Abschirmteil in der Mittelstellung des Verschwenkbereiches der Platte beidseits des Strahlenweges liegende Abschirmabschnitte auf, so daß für beide Verschwenkrichtungen immer ein und dieselbe Lichtschranke betätigt wird. Man benötigt somit nur einen Schalter. Grundsätzlich kann der Strahlengang der Lichtschranke senkrecht zu der Ebene der Platte gerichtet angeordnet sein. In anderer Ausführung ist es jedoch auch möglich, den Strahlengang der Lichtschranke parallel zur Plattenebene verlaufen zu lassen. Damit ergeben sich gegebenenfalls räumliche Vorteile für den Aufbau. Die Gestaltung des Abschirmteils bzw. der Abschirmabschnitte kann an diese Aufbaumöglichkeiten mühelos angepaßt werden.

Durch die weiterhin bevorzugte Ausführung des Treibriemens als Zahnriemen wird erreicht, daß irgendwelche Verstelleinrichtungen zum Nachspannen des Riemens vermieden werden können. Auch die Riemenleiträder sind in ihrer Riemenspannungabtastfunktion nicht durch weitere Aufgaben belastet.

In besonders bevorzugter Ausführung der Erfindung wird im Zuge der getrieblichen Entkupplung auch dafür gesorgt, daß die elektrische Energieversorgung im Zuge der Versetzbewegung innerhalb der Führungen getrennt wird. Dies verringert die Gefahr der Beschädigung des Antriebsaggregates im Defektfalle durch weitere Stromzufuhr und ermöglicht dem Fachmann eine gefahrlose und damit vereinfachte Wartung und Reparatur.

Schließlich können die Kupplung und/oder das Zwischengehäuseteil und gegebenenfalls auch das Chassisteil aus einem insoweit elastischen Kunststoff gefertigt sein, so daß Schwingungen und Ruckbewegungen nicht über die Kupplung übertragen werden. Dies ist ein weiterer Beitrag zur möglichst feinfühligen Arbeitsweise der Hindernisüberwachungseinrichtung.

Weitere bevorzugte Ausgestaltungen der Erfindung ergeben sich aus Unteransprüchen im Zusammenhang mit den in der Zeichnung wiedergegebenen Ausführungsbeispielen, auf die besonders Bezug genommen wird und deren nachfolgende Beschreibung die Erfindung näher erläutert.

Es zeigt

Fig. 1 eine schematische, perspektivische Ansicht eines Tores mit einem Antrieb der hier in Frage stehenden Art;

Fig. 2 einen Horizontalschnitt mit Blickrichtung auf das Chassis eines Motorantriebsaggregates gemäß Fig. 1, welches auf die Darstellung der Hindernisüberwachungseinrichtung beschränkt ist;

Fig. 2a eine Teilschnitt-Darstellung nach der Linie A-A in Fig. 2;

Fig. 3 einen Querschnitt durch das Antriebsmotoraggregat gemäß Fig. 1 mit einem ersten Ausführungsbeispiel des mehrteiligen Gehäuses;

Fig. 4 einen Querschnitt durch das Motorantriebsaggregat gemäß Fig. 2 mit einem zweiten Ausführungsbeispiel des mehrteiligen Gehäuses.

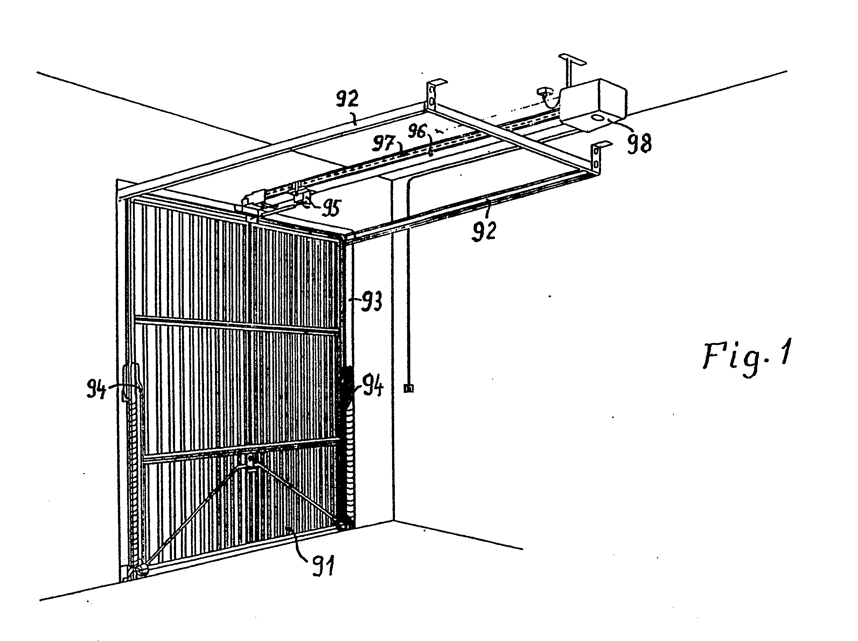

Zur beispielsweisen Verdeutlichung des Einsatzgebietes des in Frage stehenden Antriebes zeigt Fig. 1 in perspektivischer Darstellung ein Einblatt-Überkopftor in geschlossenem Zustand, dessen Torblatt 91 im oberen Kantenbereich rechts und links mit Rollen in horizontalen Führungsschienen 92 geführt ist. Im seitlichen Zargenbereich 93 sind Lenker 94 vorgesehen, die das Torblatt ein weiteres Mal führen.

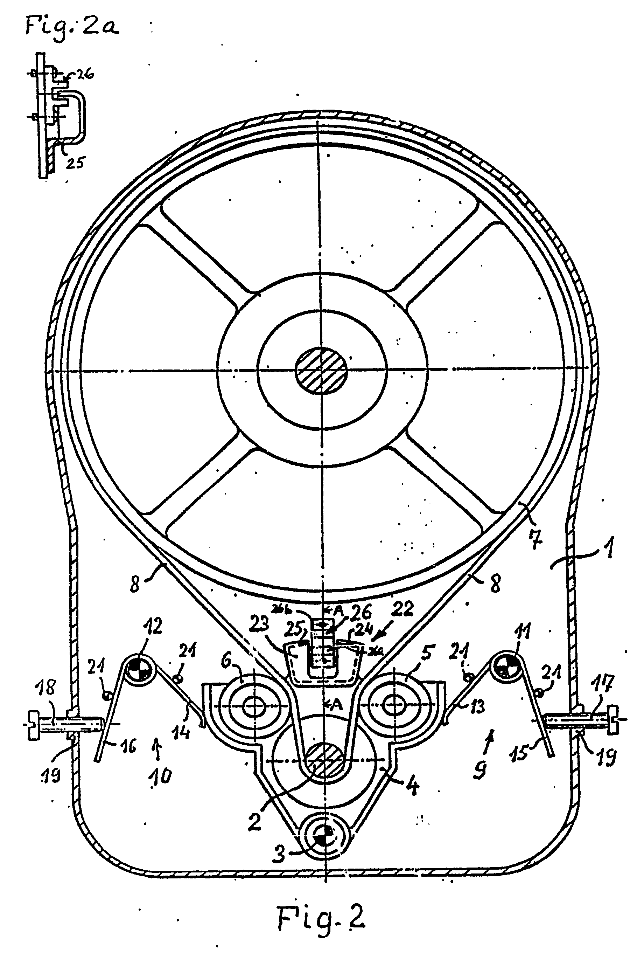

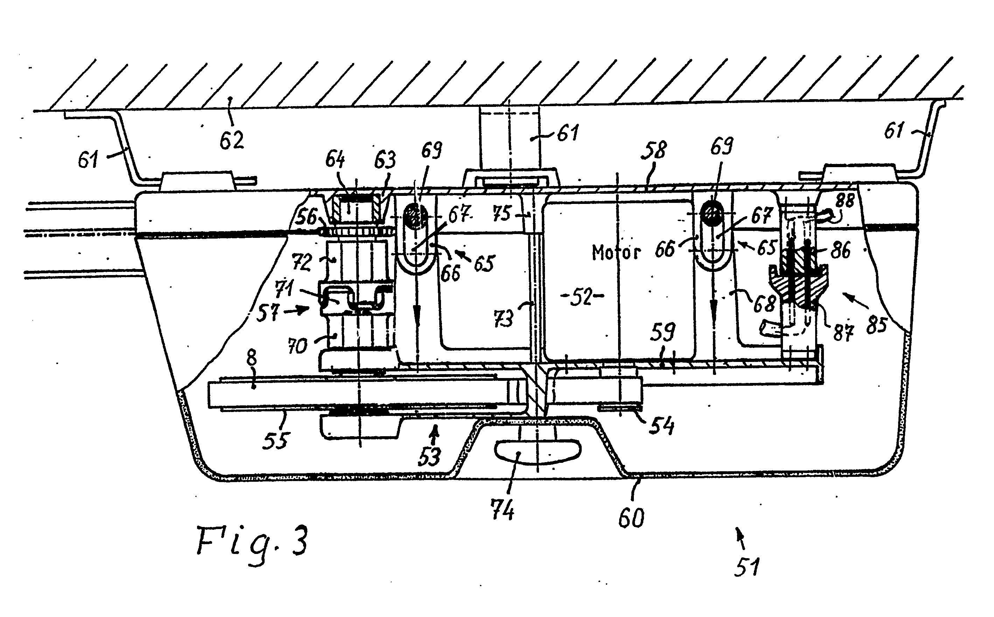

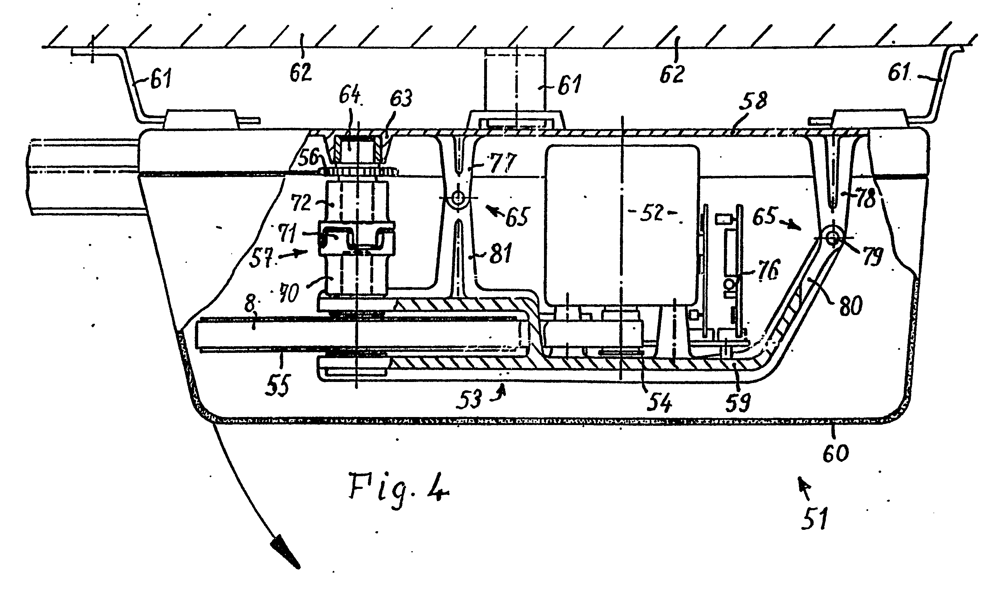

An dem Torblatt ist ein Mitnehmer 95 angelenkt, der entlang einer parallel zu den Führungsschienen 92 verlaufenden Schiene 96 längsverschiebbar geführt ist. Der Mitnehmer 95 ist an eine Endlos-Kette 97 angeschlossen, die um ein Umlenkritzel am torseitigen Ende und um ein Antriebsritzel am gegenüberliegenden Ende der Schiene 96 geführt ist, welches von dem Motorantriebsaggregat 98 angetrieben wird. Dieses Antriebsritzel ist nach den Ausführungsbeispielen der Fig. 3 und 4 mit 56 bezeichnet, es wird vom Abtriebsrad 55 dieser Figuren bzw. 7 gemäß Fig. 2 angetrieben.

Bei dem ersten Ausführungsbeispiel gemäß Fig. 2 ist das zweiteilige Gehäuse 98 zur Halterung des Motors, der Platte mit der Schalteinrichtung und des Abtriebsrades, an welches in nicht dargestellter Weise das Kettenantriebsritzel angekoppelt ist, nur hinsichtlich seines Chassisteiles 1 dargestellt. An diesem Chassisteil 1 ist in nicht näher dargestellter Weise der Antriebsmotor gehalten, der das Riementreibrad 2 antreibt. Um eine von dem Riementreibrad 2 axial beabstandete parallele Schwenkachse 3 ist eine Platte 4 schwenkbar gelagert, die zwei Riemenleiträder 5 und 6 aufweist, die außenseitig an den beiden von dem Riementreibrad 2 zu einem Abtriebsrad 7 führenden Trume des Riemens 8 angreifen und diese aufeinanderzu versetzt halten, so daß bei laufendem Antriebsmotor und demgegenüber durch ein Hindernis abgebremster Drehzahl des Abtriebsrades 7 der je nach Drehrichtung sich dann spannende Riementrum durch Rückdrängen des zugehörigen Riemenleitrades 5 die Platte 4 verschwenkt. Dieses Abbremsen des Abtriebsrades 7 gegenüber der Drehzahl des angetriebenen Riementreibrades 2 wird durch ein Hindernis in der Bewegungsbahn des Torblattes verursacht, das die Torbewegung entsprechend reduziert und über die Kette an das Abtriebsrad 7 weiterleitet.

Zu beiden Seiten der Platte sind Schenkelfedern 9 und 10 um gehäusefeste Achsen 11 und 12 gelegen gehalten, deren eine Schenkel 13 und 14 je an einer Seite der Platte anliegen, während deren andere Schenkel 15 und 16 an den inneren Stirnseiten von Stellschrauben 17 und 18 anliegen, die jeweils in Gewindebohrungen der Gehäusechassiswandabschnitte 19 und 20 eingelagert sind. Die Aufspreizbewegung der Schenkelfedern ist durch an den Schenkeln angreifende Anschläge 21 begrenzt.

Im Mittelbereich des von der Schwenkachse 3 abgewandten und dem Abtriebsrad 7 zugewandten Teiles der Platte 4 ist ein Ausleger 22 ausgebildet, an welchem ein insgesamt mit 23 bezeichneter Abschirmteil vorgesehen ist. Dieser Abschirmteil weist zwei Abschirmabschnitte 24 und 25 auf, die als etwa senkrecht zur Chassisbodenebene gerichtete Vorsprünge ausgebildet sind. Diese Vorsprünge enden in Richtung aufeinanderzu gesehen mit geringem Abstand vor dem Strahlenweg einer Lichtschranke 26, die demnach bei Mittelausrichtung der Platte zwischen den Abschirmabschnitten liegt und deren Strahlengang in diesem Normalbetriebszustand nicht unterbrochen ist. Dieser Zustand wird als Normalzustand bezeichnet, es handelt sich insoweit um einen »Ruhekontakt«.

Wie insbesondere aus der Zeichnung ohne weiteres ersichtlich ist, läßt sich durch Verdrehen der Stellschrauben 17 und 18 die Vorspannung, mit welcher die Schenkelfedern 9 und 10 gegen die Seiten der Platte 4 drücken, in feinfühliger Weise einstellen. Diese Vorspannkraft bestimmt den Schwellwert der Riemenspannung, bei dessen Überschreiten die Platte 4 je nach Drehrichtung des Riemens nach rechts oder links ausschwenkt, wodurch das rechte oder linke Abschirmteil 24 bzw. 25 in den Strahlengang der Lichtschranke eingreift und damit den Motor ab-bzw. umschaltet, zu welchem Zwecke der Lichtschranke nicht weiter dargestellte, beliebige Schalteinrichtungen nachgeordnet sind.

Der Riemen ist in nicht dargestellter Weise mit einer Innenverzahnung versehen, die in entsprechende Verzahnungen an dem Riementreibrad 2 und dem Abtriebsrad 7 eingreifen. Da somit kein Schlupf auftreten kann, ist ein Nachstellen der Riemenspannung — beispielsweise durch eine entsprechende Abstandsverstellung der Platte 4 — nicht erforderlich.

Fig. 2a läßt erkennen, daß die Abschirmabstände 24 und 25 senkrecht zum Boden des Chassisteils 1 gerichtet zwischen Sender- und Empfängerteil 26a und 26b der Lichtschranke 26 eingreifen, wenn die Platte 4 entsprechend verschwenkt wird.

In den Ausführungsbeispielen nach den Fig. 3 und 4 beherbergt das insgesamt mit 51 bezeichnete Gehäuse einen Antriebsmotor 52, der über ein Untersetzungsgetriebe 53 aus zwei über ei-nen Keilriemen miteinander verbundenen Keil-riemenrädern 54 und 55, dessen kleineres 54 dem Rotor des Antriebsmotors und dessen größeres 55 koaxial zu einem als Antriebsrad 56 arbeitenden Kettenrad angeordnet ist und mit diesem über eine insgesamt mit 57 bezeichnete Getriebekupplung in Verbindung steht. In nicht näher dargestellter Weise greift das Kettenrad 56 in die strichpunktiert angedeutete Kette ein, die entlang einer Schiene 96 (Fig. 1) geführt ist, an deren anderem nicht dargestelltem Ende ein weiteres Kettenrad als Umkehrrad angeordnet ist, so daß die Kette endlos zwischen den beiden Kettenrädern geführt ist und über ein nicht dargestelltes Schleppglied mit einem nicht dargestellten Torblatt in Verbindung steht. Je nach Drehrichtung des Antriebsmotors 52 wandert das an der Kette befestigte Schleppglied innerhalb des einen Kettentrums zwischen zwei Positionen hin und her, in deren einer das Tor geschlossen und in deren anderer das Tor geöffnet ist.

Das Gehäuse 51 besteht aus einem Chassisteil 58, einem weiteren Gehäuseteil 59 und einem Gehäusedeckel 60. An dem Chassisteil 58 sind Fußteile 61 gehalten, mit denen das Gehäuse ortsfest, beispielsweise an einer Garagendecke 62, befestigt werden kann.

An dem Chassisteil 58 ist zum Gehäuseinneren hin gesehen ein Lager 63 für die Welle 64 des Abtriebsrades 56 ausgebildet. Weiterhin sind am Boden des Chassisteils 58 die einen Teile einer insgesamt mit 65 bezeichneten Führung befestigt bzw. ausgebildet, über welche das weitere Gehäuseteil 59 mit dem Chassisteil 58 in Verbindung steht.

Bei dem Ausführungsbeispiel nach Fig. 3 besteht die Führung 65 aus vier Langlochführungen, die einander rechteckig zugeordnet sind und von denen man in der Zeichnung aufgrund des dargestellten Teilschnittes nur die beiden hinteren sieht. Die Langlochführungen bestehen jeweils aus einem am Boden des Chassisteils 58 ausgebildeten Vorsprung 66, in welchem ein etwa senkrecht zu diesem Boden verlaufendes Langloch 67 ausgebildet ist. An dem weiteren Gehäuseteil 59 sind auf den Boden des Chassisteils 58 zu gerichtete Ausleger 68 ausgebildet, die an ihren dem Boden zugewandten Endbereichen mit Bolzen 69 versehen sind, die in die Langlöcher 67 eingreifen. Auf diese Weise läßt sich das weitere Gehäuseteil 59 in Richtung der Langlöcher 67 gegenüber dem Chassisteil 58 zwischen zwei Endlagen versetzen, von denen diejenige, in der das weitere Gehäuseteil 59 dem Chassisteil 58 am weitesten angenähert ist, als Betriebsstellung aus der Zeichnung entnommen werden kann.

An dem weiteren Gehäuseteil 59 ist der Antriebsmotor 52 und das Untersetzungsgetriebe 53 gehalten. An der Welle des Treibriemenrades 55 ist die eine Hälfte 70 der Getriebekupplung 57 verdrehfest angeordnet, die mit ihren Klauen 71 in entsprechende Klauenmäuler des anderen Kupplungsteiles 72 eingreift, das an der Welle 64 des Abtriebsrades 56 verdrehfest gehalten ist. In dieser Betriebsstellung ist demnach die Welle des Antriebsmotors 52 über das Untersetzungsgetriebe 53 mit dem Treibriemen 8 (siehe Fig. 2) und die Getriebekupplung 57 mit dem Abtriebsrad 56 getrieblich verbunden, so daß bei Einschalten des Motors die Kette des Schleppkettenantriebs bewegt wird.

In den Fig. 3 und 4 entsprechen die Keilriemenräder 55 dem Antriebsrad 7 in Fig. 2 und die Keilriemenräder 54 dem Riementreibrad 2 in Fig. 2.

Der Gehäusedeckel 60 und der weitere Gehäuseteil 59 weisen etwa in ihrem Mittelbereich miteinander fluchtende Bohrungen auf, durch welche ein Schraubbolzen 73 geführt ist, der an seinem dem Gehäusedeckel 60 nach außen ragenden Ende mit einem Drehknopf 74 versehen und mit seinem anderen Ende in einen am Boden des Chassisteils 58 ausgebildeten Gewindeteil 75 eingeschraubt ist.

Dreht man den Schraubbolzen 73 aus dem Gewindeteil 75 aus, so wandern die Bolzen 69 des weiteren Gehäuseteils 59 in den Langlöchern 67 in Richtung einer Stellung der Langlochverbindung, in der sich das weitere Gehäuseteil 59 am weitesten vom Chassisboden 58 entfernt befindet. Diese Entfernungsbewegung des weiteren Gehäuseteils 59 vollführen zugleich die an diesem Gehäuseteil gehaltenen Elemente des Antriebes, nämlich der Antriebsmotor 52, das Untersetzungsgetriebe 53 und der Kupplungsteil 70, wodurch die Klauen 71 des Kupplungsteils 70 aus den Klauenmäulern des Kupplungsteils 72 herausgeführt werden. Damit ist der Antriebsmotor getrieblich von dem Abtriebsrad 56 getrennt, das demzufolge bei einer Bewegung der Kette durch das Torblatt von Hand frei mitlaufen kann. In dieser Trennstellung sind zugleich die beiden Teile 86 und 87 eines elektrischen Kupplungssteckers 85 außer Eingriff, über welchen die elektrischen Speiseleitungen 38 und eventuelle Steuerleitungen geführt sind. Jedenfalls wird der elektrische Kupplungsstecker 85 in gleicher Weise wie die Getriebekupplung 57 bei Versetzen des weiteren Gehäuseteils 59 in der Führung 65 zwischen der Betriebsstellung und der Trennstellung jeweils ein- bzw. ausgekuppelt. Damit ist sichergestellt, daß bei Überführen des weiteren Gehäuseteils 59 in die Trennstellung die an dem Gehäuseteil 59 gehaltenen elektrischen Geräte ohne Stromversorgung sind.

Wird der Schraubbolzen 73 ganz aus dem Gewindeteil 75 herausgedreht, so läßt er sich durch die nicht dargestellte Bohrung im weiteren Gehäuseteil 59 hindurchziehen, wodurch sich der Gehäusedeckel 60 ganz von dem Gehäuse entfernen läßt. In dieser Stellung sind die Teile des Antriebsaggregates entsprechend zugänglich, und zwar gefahrlos, weil durch die Trennung des elektrischen Kupplungssteckers 85 die Stromversorgung unterbrochen wurde. Zugleich ist die Getriebekupplung 57 ausgerückt, so daß die beweglichen Teile des Antriebsaggregates bequem von Hand, beispielsweise zu Wartungszwecken, gedreht werden können.

Es ist auch möglich, die Eingriffslänge zwischen dem Gewindebolzen 73 und dem Gewindeteil 75 so lang auszubilden, daß bereits nach einer ersten Herausdrehstrecke des Bolzens 73 aus dem Gewindeteil 75 die Getriebekupplung 57 getrennt ist, so daß für den Fall eines Defektes am Antriebsaggregat das Torblatt von Hand bewegt werden kann, wie dies zuvor geschildert wurde. Erst nach einer weiteren Herausdrehstrecke wird der Bolzen 73 völlig frei, so daß sich der Gehäusedeckel 60 entfernen läßt.

Bei dem Ausführungsbeispiel gemäß Fig. 4 ist lediglich die Führung 65 zwischen dem Chassisteil 58 und dem weiteren Gehäuseteil 59 anders ausgestaltet, ansonsten stimmen die übrigen Teile überein, so daß auf die entsprechende Beschreibung des Ausführungsbeispieles nach Fig. 3 verwiesen werden kann.

An dem Chassisteil 58 des Ausführungsbeispieles gemäß Fig. 4 sind zwei vorspringende Lagerböcke 77 und 78 ausgebildet, von denen der letztere 78 ein Schwenklager mit einer Schwenkachse 79 bildet, um welche ein Endbereich 80 des weiteren Gehäuseteils 59 verschwenkbar gelagert ist. An dem Lagerbock 77 gegenüberliegender Stelle ist das weitere Gehäuseteil 59 mit einem vorspringenden Stützbock 81 versehen, welcher in den Lagerbock 77 so eingreift, daß in beiden Böcken vorgesehene Bohrungen in fluchtende Ausrichtung gelangen. Durch die Bohrungen ist dann ein nicht dargestellter Bolzen, eine Sperrstange oder dergleichen einführbar, so daß das weitere Gehäuseteil 59 in der gekennzeichneten Betriebsstellung an dem Chassisteil 58 verdrehsicher gehalten ist. In dieser Betriebsstellung sind die Kupplungsteile 70 und 72 der Getriebekupplung 57 in Eingriff, eine Antriebsbewegung des Motors 52 wird auf das Abtriebsrad 56 übertragen.

Trennt man die Verbindung zwischen dem Lagerbock 77 und dem Stützbock 81, so läßt sich das weitere Gehäuseteil 59 um die Schwenkachse 79 verdrehen, wodurch die Getriebekupplung 57 getrennt wird. In nicht dargestellter Weise wird im Zuge dieser Trennbewegung, d. h. dem Übergang von der Betriebsstellung in die Trennstellung, auch ein elektrischer Kupplungsstecker derart betätigt, daß er in der gezeichneten Betriebsstellung eingekuppelt und in der Trennstellung nach Verschwenken des weiteren Gehäuseteils 59 um die Schwenkachse 79 entkuppelt ist. Damit erhält man dieselben Verhältnisse, wie sie im Zusammenhang mit Fig. 3 geschildert wurden.

Auch im vorliegenden Falle kann man zwei getrennte Betriebsphasen nacheinander sicherstellen, beispielsweise dadurch, daß bei geschlossenem Gehäusedeckel 60 die Verbindung zwischen dem Lagerbock 77 und dem Stützbock 81 getrennt wird, worauf das weitere Gehäuseteil 59 in die Trennstellung übergeht. Erst bei Eintreffen eines Fachmannes kann in nicht dargestellter Weise das Gehäuse selbst entfernt werden, woraufhin das Antriebsaggregat für Reparatur- und Wartungszwecke zugänglich wird.

Soweit es erforderlich ist, das Antriebsaggregat bzw. Teile davon auszuwechseln, können die Bolzen 69 der Langlochverbindungen des Ausführungsbeispieles gemäß Fig. 3 bzw. die Schwenkachse 79 des Ausführungsbeispieles gemäß Fig. 4 durch Entfernen einfacher Arretierungen wie Sicherungsringen aus ihrer Eingriffstellung entfernt werden, so daß sich das weitere Gehäuse 59 von dem Chassisteil 58 völlig abnehmen läßt. Selbstverständlich können hier auch andere Trennmaßnahmen vorgesehen werden, je nachdem, wie die Führung ausgestaltet ist. Ähnliches gilt für die Ausgestaltung anderer Teile und Elemente.

**Patentansprüche**

1. Torantrieb mit einem elektrischen Antriebsmotoraggregat (52, 53) und einem mit diesem über einen Treibriemen (8) oder dergleichen getrieblich verbundenen Abtriebsrad (7, 55), an welches über eine Kupplung (57) koaxial ein Abtriebsritzel (56) eines Schleppkettenantriebes angeschlossen ist, wobei der Treibriemen außer um das Abtriebsrad an drei Riemenrädern angreifend geführt ist, deren mittleres als Riementreibrad (2, 54) auf der Abtriebswelle des Antriebsmotors (52) angeordnet bzw. ausgebildet ist und deren beiden anderen als Riemenleiträder (5, 6) ausgebildet und an beidseitig des Riementreibrades verlaufenden Abschnitten einer um eine parallel zur Abtriebswelle verlaufende Schwenkachse verschwenkbaren Platte (4) derart gelagert sind, daß der Treibriemen gegenüber dem geraden Riementrumverlauf zwischen dem Riementreibrad und dem Abtriebsrad eingeschnürt ist und die federnd in die Mittelstellung beaufschlagte Platte über einen Ausleger in die Betätigungsbahn einer im Zuge der Verschwenkbewegung der Platte liegende Schalteinrichtung (23, 26) eingreift, wobei ein mehrteiliges Gehäuse vorgesehen ist, in welchem zumindest die an dem Treibriemen angreifenden Riemenleiträder mit der über die Platte betätigbaren Schalteinrichtung und die Kupplung aufgenommen sind, dadurch gekennzeichnet, daß das Gehäuse (51) ein der Anbringung an einer der Garagenwandungen, insbesondere der Garagendecke, dienendes Chassisteil (58) und ein weiteres Gehäuseteil (59) aufweist, welches über eine Führung (65) mit dem Chassisteil (58) verbunden ist, in welcher das weitere Gehäuseteil (59) zwischen einer Betriebsstellung, in der sich die Kupplung (57) im Einkupplungszustand befindet, und einer Trennstellung, in der sich die Kupplung (57) im Ausrückzustand befindet, versetzbar ist und an welchem das Antriebsmotoraggregat (52, 53) mit der verschwenkbar gelagerten Platte (4) und der von dieser betätigten Schalteinrichtung (23, 26) gehalten ist, die als Lichtschranke (26) ausgebildet ist und deren in den Strahlengang zwischen Sender und Empfänger eingreifender Abschirmteil (24, 25) an dem Ausleger (22) angeordnet ist, deren Mittelstellung durch zwei jeweils an den entgegengesetzten Stellen der Platte (4) angreifende Federn (9, 10) eingestellt ist, deren Vorspannung jeweils mit Hilfe eines Verstellelementes (17, 18) veränderlich einstellbar ist.

2. Torantrieb nach Anspruch 1, dadurch gekennzeichnet, daß zwischen dem Chassisteil (58) und dem weiteren Gehäuseteil (59) ein elektrischer Kupplungsstecker (85) angeordnet ist, der sich in der Betriebsstellung des weiteren Gehäuseteils (59) in der Einkupplungslage und in dessen Trennstellung in der Auskupplungslage befindet.

3. Torantrieb nach Anspruch 1 oder 2, dadurch gekennzeichnet, daß die Kupplung (57) als Klauenkupplung (70, 71, 72) ausgebildet ist.

4. Torantrieb nach einem der vorhergehenden Ansprüche, dadurch gekennzeichnet, daß die Kupplung (57) aus schwingungsdämpfendem Werkstoff besteht bzw. an den Eingriffsflächen einen solchen Werkstoff aufweist.

5. Torantrieb nach einem der vorhergehenden Ansprüche, dadurch gekennzeichnet, daß zumindest das weitere Gehäuseteil (59) aus einem schwingungsdämpfenden Werkstoff besteht.

6. Torantrieb nach einem der vorhergehenden Ansprüche, dadurch gekennzeichnet, daß die Führung (65) mehrere Langloch-Bolzen-Verbindungen (67, 69) aufweist.

7. Torantrieb nach Anspruch 6, dadurch gekennzeichnet, daß das Gehäuse (51) einen Gehäusedeckel (60) aufweist, der von einem Schraubbolzen (73) durchgriffen ist, dessen Schaft den weiteren Gehäuseteil (59) durchgreift und dessen Gewindeteil (75) in das er einschraubbar ist, an dem Chassisteil (58) angeordnet ist.

8. Torantrieb nach Anspruch 6 oder 7, dadurch gekennzeichnet, daß die Bolzen (69) der Langloch-Bolzen-Verbindungen (67, 69) Splint- oder Sicherungsscheiben-Arretierungen aufweisen.

9. Torantrieb nach einem der Ansprüche 1 bis 5, dadurch gekennzeichnet, daß die Führung (65) ein Scharnier (78, 79, 80) aufweist, dessen Verdrehstellung in der Betriebsstellung des weiteren Gehäuseteils (59) durch ein Sperrteil (77, 81) festgelegt ist.

10. Torantrieb nach Anspruch 9, dadurch gekennzeichnet, daß das Sperrteil (77, 81) einen Bolzen aufweist, der durch ein Arretierelement lösbar in seiner Lage gehalten ist, und daß die Schwenkachse (79) des Scharniers (78, 79, 80) durch ein lösbares Arretierelement in seiner Scharnierlage gehalten ist.

11. Torantrieb nach einem der vorhergehenden Ansprüche, dadurch gekennzeichnet, daß die Getriebekupplung (57) und der Kupplungsstecker (85) durch Lösen nur einer Schraubverbindung (73, 75) von der Einkupplungsstellung in die Auskupplungsstellung überführbar sind.

12. Torantrieb nach Anspruch 11, dadurch gekennzeichnet, daß bei Lösen der Schraubverbindung (73, 75) innerhalb eines ersten Löseschraubvorganges die Trennung der Kupplungen (57, 85) und innerhalb eines daran anschließenden weiteren Löseschraubvorganges der Gehäusedeckel (60) abnehmbar ist.

13. Torantrieb nach einem der vorhergehenden Ansprüche, dadurch gekennzeichnet, daß der Abschirmteil (23) in der Mittelstellung des Verschwenkbereiches der Platte (4) beidseits des Strahlenweges der Lichtschranke (26) liegende Abschirmabschnitte (24, 25) aufweist.

14. Torantrieb nach einem der vorhergehenden Ansprüche, dadurch gekennzeichnet, daß der Strahlengang etwa parallel zu der Verschwenkebene der Platte (4) verlaufend angeordnet ist.

15. Torantrieb nach einem der vorhergehenden Ansprüche, dadurch gekennzeichnet, daß an entgegengesetzten Stellen der Platte (4) jeweils eine als Schenkelfeder (9, 10) ausgebildete Feder angreift, die um eine Achse (11 bzw. 12) verschwenkbar gelagert ist und deren der Platte (4) abgewandter Schenkel (15 bzw. 16) an einem Ende einer Verstellschraube (17 bzw. 18) anliegt, die in einem in einem ortsfesten Teil vorgesehenen Gewinde in Richtung der Federbewegungsstrecke versetzbar gehalten ist.

16. Torantrieb nach Anspruch 15, dadurch gekennzeichnet, daß die Achsen (11, 12) der Schenkelfedern (9, 10) außerhalb der Platte (4) angeordnet sind und daß jeweils beide Schenkel (13, 15 bzw. 14, 16) der Schenkelfedern (9 bzw. 10) durch Anschläge (21) hinsichtlich ihrer Spreizbewegungsstrecke begrenzt sind.

17. Torantrieb nach Anspruch 15 oder 16, dadurch gekennzeichnet, daß die Gewinde für die beiden Stellschrauben (17, 18) in entgegengesetzten Randbereichen (19) eines die Antriebsmotorwelle lagernden und die Schwenkachse (3) der Platte (4) haltenden Gehäuseteils (1) vorgesehen sind, welches einen Abschnitt des weiteren Gehäuseteils (59) bildet.

18. Torantrieb nach einem der vorhergehenden Ansprüche, dadurch gekennzeichnet, daß der Treibriemen als Zahnriemen (8) ausgebildet ist, der in entsprechend ausgebildete Verzahnungen des Riementreibrades (2; 54) und des Abtriebsrades (7; 55) eingreift.

**Claims**

1. A door drive having an electrical drive motor unit (52, 53) and a driven pulley (7, 55) which is in geared communication therewith via a driving belt (8) or the like and to which a driven pinion (50) of a drag-chain drive is connected coaxially via a clutch (57), the driving belt being guided, with engagement, not only round the driven pulley but also against three belt pulleys, of which the middle one is disposed or constructed as a belt drive pulley (2, 54) on the driven shaft of the drive motor (52), and of which both the others are constructed as belt guide pulleys (5, 6) and are so mounted on portions, extending at both sides of the belt drive pulley, of a plate (4), which is pivotable about a pivot axis extending parallel to the driven shaft, that the driving belt is constricted, relative to the straight course of the belt strand, between the belt drive pulley and the driven pulley, and the plate, which is resiliently biassed into the mid-position, encroaches, by means of an arm, into the actuating path of a switching device (23, 26) situated in the course of the pivotal movement of the plate, a multiple-part housing being provided in which at least the belt guide pulleys acting on the driving belt are received together with the switching device, which can be actuated via the plate, and the clutch, characterised in that the housing (51) comprises a chassis member (58) serving for mounting on one of the garage wall members, in particular the garage roof, and a further housing portion (59) which is connected to the chassis member (58) via a guide (65) in which the further housing portion (59) is displaceable between an operating position in which the clutch (57) is in the engaged state and a separating position in which the clutch (57) is in the disengaged state, and on which portion (59) the drive motor unit (52, 53) is held with the pivotally mounted plate (4) and the switching device (23, 26) actuated thereby, the switching device being constructed in the form of a light barrier (26) and the screening portion (24, 25) of the switching device encroaching in the path of rays between transmitter and receiver being disposed on the arm (22), the mid-position of which is adjusted by two springs (9, 10) acting respectively on the opposite points of the plate (4), the initial tension of each spring being variably adjustable by means of an adjusting element (17, 18).

2. A door drive as claimed in Claim 1, characterised in that disposed between the chassis member (58) and the further housing portion (59) is an electrical coupling plug (85) which is in the engaged position when the further housing portion (59) is in the operating position and in the disengaged position when it is in its separating position.

3. A door drive as claimed in Claim 1 or 2, characterised in that the clutch (57) is constructed in the form of a dog clutch (70, 71, 72).

4. A door drive as claimed in any one of the preceding Claims, characterised in that the clutch (57) consists of vibration-damping material or comprises such a material on the engagement surfaces.

5. A door drive as claimed in any one of the preceding Claims, characterised in that at least the further housing portion (59) consists of a vibration-damping material.

6. A door drive as claimed in any one of the preceding Claims, characterised in that the guide (65) comprises a plurality of slot-pin connections (67, 69).

7. A door drive as claimed in Claim 6, characterised in that the housing (51) comprises a housing cover (60) through which extends a screw bolt (73), the shank of which extends through the further housing portion (59) and the threaded portion (75) for which, into which it can be screwed, is disposed on the chassis member (58).

8. A door drive as claimed in Claim 6 or 7, characterised in that the pins (69) of the slot-pin connections (67, 69) comprises circlip or locking-washer locking means.

9. A door drive as claimed in any one of Claims 1 to 5, characterised in that the guide (65) comprises a hinge (78, 79, 80), the rotational position of which is set by a locking member (77, 81) when the further housing portion (59) is in the operating position.

10. A door drive as claimed in Claim 9, characterised in that the locking member (77, 81) comprises a pin which is releasably held in position by a locking element, and that the pivot pin (79) of the hinge (78, 79, 80) is held in its hinge position by a releasable locking element.

11. A door drive as claimed in any one of the preceding Claims, characterised in that the transmission clutch (57) and the coupling plug (85) can be transferred from the engaged position into the disengaged position by loosening only one screw connection (73, 75).

12. A door drive as claimed in Claim 11, characterised in that during the loosening of the screw connection (73, 75), the separation of the clutch and coupling (57, 85) is effected within a first screw-loosening operation and the housing cover (60) can be removed within a further screw-loosening operation following thereon.

13. A door drive as claimed in any one of the preceding Claims, characterised in that when the plate (4) is in the mid-position of the pivotal range, the screening portion (23) comprises screening sections (24, 25) situated at both sides of the light-path of the light barrier (26).

14. A door drive as claimed in any one of the preceding Claims, characterised in that the path of rays is disposed extending substantially parallel to the plane of pivoting of the plate (4).

15. A door drive as claimed in any one of the preceding Claims, characterised in that acting on each of the opposite points of the plate (4) is a spring which is constructed in the form of a leg spring (9, 10) and which is mounted for pivoting about a pin (11 or 12) and of which the leg (15 or 16) remote from the plate (4) bears against one end of an adjusting screw (17 or 18) which is held for displacement in the direction of the path of movement of the spring in a thread provided in a stationary part.

16. A door drive as claimed in Claim 15, characterised in that the pins (11, 12) of the leg springs (9, 10) are disposed outside the plate (4) and that each of the two legs (13, 15 or 14, 16) of the leg springs (9 or 10) are limited by stops (21) with regard to the extent of their expanding movement.

17. A door drive as claimed in Claim 15 or 16, characterised in that the threads for the two adjusting screws (17, 18) are provided in opposite marginal regions (19) of a housing part (1) which supports the drive motor shaft and holds the pivot pin (3) of the plate (4) and which forms a portion of the further housing portion (59).

18. A door drive as claimed in any one of the preceding Claims, characterised in that the driving belt is constructed in the form of a toothed belt (8) which engages in correspondingly constructed teeth of the belt drive pulley (2; 54) and of the driven pulley (7; 55).

**Revendications**

1. Entraînement de portail comprenant un moteur électrique (52, 53) et une poulie entraînée (7, 55) s'engrénant sur ledit moteur par l'intermédiaire d'une courroie d'entraînement (8) ou un dispositif similaire, auquel est accouplé, par l'intermédiaire d'un embrayage (57) un pignon réducteur (56) d'un entraînement à chaînes, ladite courroie d'entraînement passant non seulement autour de la poulie entraînée mais passant également autour de trois poulies d'entraînement à courroies dont celle (2, 54) du milieu est disposée sur l'arbre de sortie du moteur d'entraînement (52) et dont les deux autres font fonction de poulies de renvoi et sont montées sur des sections, s'étendant bilatéralement à la poulie d'entraînement, d'un plateau (4) pivotable autour d'un axe parallèle à l'arbre de sortie, de telle manière que la courroie d'entraînement passe, face au trajet rectiligne du brin de courroie, entre la poulie d'entraînement et la poulie entraînée, et de manière que ce plateau chargé élastiquement par l'intermédiaire d'un levier, s'engage dans la voie de manœuvre d'un dispositif sélecteur (23, 26) placé sur le trajet du mouvement pivotant du plateau (4), un carter composé de plusieurs pièces ayant été prévu dans lequel sont logées au moins les poulies de renvoi venant en prise avec la courroie d'enraînement et le dispositif sélecteur actionnable par l'intermédiaire du plateau (4) ainsi que l'embrayage, caractérisé par le fait que le carter (51) présente une partie formant châssis (58) servant à la fixation sur l'une des parois du garage, en particulier au plafond, et une autre partie formant carter (59), qui est reliée, par un guidage (65), avec la partie formant châssis (58) dans laquelle la partie (59) est placée entre une position de fonctionnement dans laquelle l'embrayage (57) est à l'état embrayé et une position de débrayage dans laquelle l'embrayage (57) est à l'état débrayé, et sur laquelle est fixé le moteur (52, 53) au moyen du plateau (4) pivotable et le dispositif sélecteur (23, 26) actionné par le plateau (4) et constitué par une cellule photoélectrique (26) et d'une partie formant écran (24, 25) pénétrant dans le trajet des rayons entre l'émetteur et le récepteur sur le levier (22) dont la position centrale est restée réglée par deux ressorts (9, 10) s'engageant respectivement dans les points opposés du plateau (4), ressorts dont la tension initiale est réglable respectivement à l'aide d'un élément d'ajustage (17, 18).

2. Entraînement de portail selon la revendication 1, caractérisé par le fait qu'entre la partie formant châssis (58) et l'autre partie du carter (59) est disposée une prise électrique d'accouplement, qui se trouve à l'état embrayé lorsque la partie de carter (59) est dans la position de fonctionnement et à l'état débrayée lorsque la partie de carter (59) est en position écartée.

3. Entraînement de portail selon les revendications 1 ou 2, caractérisé par le fait que l'embrayage (57) est un embrayage à griffes (70, 71, 72).

4. Entraînement de portail selon l'une des revendications précédentes, caractérisé par le fait que l'embrayage (57) est constitué en une matière absorbant les vibrations ou possède une telle matière sur ses surfaces actives.

5. Entraînement de portail selon l'une des revendications précédentes, caractérisé par le fait qu'au moins la partie formant carter (59) est constituée en une matière absorbant les vibrations.

6. Entraînement de portail selon l'une des revendications précédentes, caractérisé par le fait que le guidage (65) comprend plusieurs liaisons (67, 69) constituées d'un boulon coulissant dans un trou oblong.

7. Entraînement de portail selon la revendication 6, caractérisé par le fait que le carter (51) comprend un couvercle (60) qui est pénétré par un boulon fileté (73) dont la tige passe à travers la partie de carter (59) et dont la partie taraudée (75) dans laquelle il est vissé est disposée sur la partie formant châssis (58).

8. Entraînement de portail selon les revendications 6 ou 7, caractérisé par le fait que les boulons (69) des liaisons (67, 69) par boulons et trous oblongs comprennent des butées ou des rondelles d'arrêt.

9. Entraînement de portail selon l'une des revendications 1 à 5, caractérisé par le fait que le guidage (65) comprend une charnière (78, 79, 80) dont la position de rotation en situation de fonctionnement de la partie de carter (59) est déterminée par un élément de blocage (77, 81).

10. Entraînement de portail selon la revendication 9, caractérisé par le fait que l'élément de blocage (77, 81) comporte un goujon qui est maintenu dans sa position de manière amovible par un élément de blocage et par le fait que l'axe de pivotement (79) de la charnière (78, 79, 80) est maintenu dans sa situation articulée par un élément de blocage amovible.

11. Entraînement de portail selon l'une des revendications précédentes, caractérisé par le fait que l'embrayage mécanique (57) et la prise électrique formant embrayage (85) sont transférables de la position embrayée à la position débrayée par un assemblage vissé (73, 75).

12. Entraînement de portail selon la revendication 11, caractérisé par le fait qu'en desserrant l'assemblage vissé (73, 74) les embrayages (57, 85) se séparent au cours d'une première opération de desserrage et le couvercle du carter (60) peut être démonté au cours de l'opération de desserrage consécutive.

13. Entraînement de portail selon l'une des revendications précédentes, caractérisé par le fait que la partie formant écran (23) présente en position centrale de la zone de pivotement du plateau (4), des deux côtés du trajet des rayons de la cellule photoélectrique (26), des sections formant écran (24, 25).

14. Entraînement de portail selon l'une des revendications précédentes, caractérisé par le fait que le trajet des rayons est disposé sensiblement parallèlement au plan de pivotement du plateau (4).

15. Entraînement de portail selon l'une des revendications précédentes, caractérisé par le fait qu'en des points opposés du plateau (4), s'engage respectivement un ressort à lames (9, 10) qui est placé de manière pivotable autour d'un axe (11 ou 12) et dont la lame (15 ou 16) opposée au plateau (4) s'appuie à l'extrémité d'une vis de réglage (17 ou 18) qui est vissée dans un filetage pratiqué dans une pièce fixe, filetage dans lequel elle peut se déplacer dans le sens du mouvement du ressort.

16. Entraînement de portail selon la revendication 15, caractérisé par le fait que les axes (11, 12) des ressorts (9, 10) sont disposés extérieurement au plateau (4) et que les deux lames (13, 15 ou 14, 16) des ressorts (9 ou 10) sont limités dans leur mouvement d'écartement par des butées (21).

17. Entraînement de portail selon les revendications 15 ou 16, caractérisé par le fait que les filetages pour les deux vis de réglage (17, 18) sont pratiqués dans des zones de bordures opposées (19) d'une partie de carter (1) contenant l'arbre d'entraînement du moteur et l'axe de pivotement (3) du plateau (4) et constituant une section de la partie de carter (59).

18. Entraînement de portail selon l'une des revendications précédentes, caractérisé par le fait que la courroie d'entraînement est une courroie dentée (8) qui s'engage avec des dentures de forme correspondante de la poulie d'entraînement (2, 54) et de la poulie entraînée (7, 55).

Fig. 1

Fig.2a

Fig.2

Fig. 3

0 068 234

Fig. 4

0 068 234